# EUROPÄISCHE PATENTSCHRIFT

(11) **EP 2 433 918 B1**
(45) Veröffentlichungstag und Bekanntmachung des Hinweises auf die Patenterteilung: **21.08.2013**
(21) Anmeldenummer: 10010507.1
(22) Anmeldetag: 24.09.2010
(51) Int. Cl.: C04B 28/02, C04B 28/10, C04B 40/00

(54) **Baustoffzusammensetzung sowie deren Verwendung zur Entfeuchtung und/oder Feuchteregulierung von Bauwerken**
Building composition and use of same for removing moisture and/or regulating the moisture levels of structures
Composition de matériau de construction et son utilisation pour la déshumidification et/ou la régulation d'humidité de constructions

(43) Veröffentlichungstag der Anmeldung: 28.03.2012
(73) Patentinhaber: Maier, Dieter, 86807 Buchloe (DE); Maier, Christoph, 86807 Buchloe (DE)
(72) Erfinder: Maier, Helga, 86807 Buchloe (DE)
(74) Vertreter: Käck, Stefan

(56) Entgegenhaltungen:
- WO-A1-01/28697
- CN-A- 101 245 613
- CN-B- 101 234 872
- DE-A1- 2 917 263
- DE-A1- 19 844 722
- GB-A- 813 009

## Beschreibung

Die Erfindung betrifft eine Baustoffzusammensetzung enthaltend ein Bindemittel, ausgewählt aus Zement oder Kalk, Vermikulit, eine Additivzusammensetzung sowie optional einen Zuschlagsstoff, ausgewählt aus Sand und/oder Blähglas. Die Erfindung ist ferner auf die Verwendung der Baustoffzusammensetzung als Entfeuchtungs-, Feuchteregulierungs-, Feuchtmauerputz und/oder Mörtel oder als Baustoff gerichtet. Ein weiterer Gegenstand der Erfindung ist ein Verfahren zur Entfeuchtung und/oder Feuchteregulierung von Mauerwerken, wobei die erfindungsgemäße Baustoffzusammensetzung Verwendung findet. Zuletzt betrifft die Erfindung ein Mörtel-, Putz-, Beschichtungs oder Baustoffsystem enthaltend die erfindungsgemäße Baustoffzusammensetzung.

Feuchte und salzbelastete Bauteile zerstören langsam aber nachhaltig die Bausubstanz sowie wertvolles Lagergut, Geräte, Möbel und somit wertvolles Vermögen. Feuchte Bauwerke sind Brutstätten für Schimmel und Bakterien und gefährden somit auch die Gesundheit der Nutzer. Feuchte Wände sind zudem kalt, besitzen wenig Dämmkraft und führen zu unnötig hohen Heizkosten. Mauerfeuchte und Mauersalze stehen in engem Zusammenhang mit den Schäden am Mauerwerk. Die unmerkliche Durchfeuchtung und die damit oft verbundene Versalzung des Mauerwerks als Folge langjähriger Einwirkung von Wasser über das Erdreich oder durch Risse in undichten Fugen gefährden die Gebäude. Nässe wird nach innen transportiert, die darin gelösten Salze wandern nach oben. Schadstoffe belasten die Mörtelfugen, den Putz und auch die Farbe bis zur Zerstörung.

Versiegelungen der Außenfläche durch Sperrputze, Vliese und ähnliches verschieben den Versalzungshorizont weiter nach oben. Die Ursache von Feuchtigkeit sind meist kapillar aufsteigende Feuchtigkeit, hygroskopische Feuchtigkeit durch Salzbelastung, Kondensation durch Temperaturunterschiede sowie Feuchteschäden durch Niederschläge und/oder Hochwasser.

Somit sind Baustoffe notwendig, die diese Feuchte beseitigen bzw. regulieren können. Insbesondere ist auch das Feuchtigkeitsproblem von alten Gebäuden im Innen- und Außenbereich eine Erscheinung mit steigender Tendenz. Eine dauerhafte Bekämpfung von Feuchtigkeit und die damit verbundenen Probleme wie Schimmelpilze und Ausbildungen am Innen- und Außenbereich des Mauerwerks sind nur über den systematischen und dauerhaften Entzug der nachsteigenden Feuchtigkeit zu erreichen, was von der Fachwelt durchweg anerkannt wird. In vielen Publikationen wird beschrieben, dass der Einsatz von herkömmlichen Sanierputzen und/oder sperrenden Maßnahmen durch hohen Chemieeinsatz Salz-, Chlorid- und Sulfatausbildungen sowie Schimmelpilzwachstum nicht auf Dauer verhindern kann. Außerdem werden mit sperrenden Maßnahmen die Probleme nicht gelöst, sondern nur verschoben.

Im Stand der Technik ist bekannt, dass Vermikulit, ein expandierendes Aluminium-Eisen-Magnesiumsilikat, welches aus Glimmer durch Temperatureinwirkung hergestellt und gewonnen wird, ein Material mit sehr hoher Wasseraufnahmefähigkeit und Abgabe ist, somit ähnlich wie ein Schwamm wirkt und zur Wärmedämmung beiträgt.

Der Einsatz von Vermikulit als Zuschlagstoff von Putzen für den Innen- und Außenbereich von Gebäuden ist bekannt, siehe beispielsweise EP 1 775 272 A2, welche eine kostengünstige, dauerhafte und gesundheitsverträgliche Schimmelsanierung durch ein Beschichtungsverfahren offenbart, bei welchem dem Schimmelputz der Nährboden genommen wird.

Die DE 34 09 664 C2 zeigt einen Dämmschutz mit verbesserter Wärmedämmwirkung der Baustoffklasse A (nicht brennbar) auf. Durch den Einsatz von Vermikulit besitzt dieser eine hohe Flexibilität, welche eine Anpassung des Putzes an den sich beispielsweise temperaturbedingt in Bewegung befindlichen Untergrund ermöglicht.

Die DE 1 964 796 A offenbart ein Material zur Wärme- und Schallisolierung von Oberflächen, welches eine geringe Dichte aufweist. Der Einsatz von Vermikulit dient hierbei als Isoliermittel. Auf die Verwendung des Materials zum Verputzen von Oberflächen wird in diesem Zusammenhang hingewiesen.

DE 92 13 531 U1 beschreibt eine Beschichtungsmasse, welches die Vereinigung hoher Dehnbarkeit mit geringer Brennbarkeit aufzeigt. Grundlage hierfür ist der Einsatz brennbarer, organischer Zusätze, welche neben einem hohen Volumenanteil nur einen geringen Gewichtsanteil besitzen. Hierbei werden Anteile in Form von Hohlkügelchen genannt, die beispielsweise aus Vermikulit bestehen.

Die DE 810 255 B beschreibt eine aufspritzbare Verputzmasse, welche entblätterten Vermikulit enthält. Durch das Ineinandergreifen der Vermikulitteilchen wird ein späteres Reißen oder Abblättern des Putzes verhindert.

Auch die US 2 083 961 A offenbart einen Dämmputz, beispielsweise aus Gips, Zement oder Kalk, welcher granulierten Kork oder Vermikulit enthält.

Der Offenlegungsschrift DE 29 17 263 A1 ist ein Putzmörtel mit leichten, porigen Zuschlagstoffen zu entnehmen, der durch den Einsatz von Vermikulit sowie eines chemischen Zusatzes mit einem oberflächenaktiven, nichtionogenen Bestandteil, neben wärmedämmenden und kondensationsverhindernden Eigenschaften eine wasserabweisende Wirkung sowie eine hohe Widerstandsfähigkeit gegen die Vegetation von Mikroorganismen besitzt.

DE 20 2004 020 646 U1 beschreibt ebenfalls die Beschichtung von Mauerwerk, die gegen Schimmelbefall resistent ist. Durch den Zusatz von Farbpigmenten wird eine Eigenfärbung erreicht, die das sonst übliche nachträgliche Überarbeiten zur Farbgestaltung überflüssig macht.

Aus der GB 813 009 A, der CN 101 245 613 A sowie der CN 101234 872 B sind jeweils Baustoffzusammensetzungen bekannt, die zur Feuchtigkeitskontrolle von Mauerwerken aufgetragen werden.

Ein Problem, das bei der Verwendung von Vermikulit in Baustoffzusammensetzungen entsteht ist jedoch die Entmischung durch Aufschwimmen des Vermikulits während des Anmischens beispielsweise eines Putzes. Dadurch kommt es auch in einem ausgehärteten Baustoff zu einer inhomogenen Verteilung der Bestandteile.

Die Aufgabe der vorliegenden Erfindung bestand deshalb in der Bereitstellung einer Baustoffzusammensetzung, welche die oben genannten Probleme der Entfeuchtung und Feuchteregulierung von Mauerwerken beseitigt sowie das Problem des Entmischens der Baustoffzusammensetzung nicht zeigt.

Die Aufgabe wird gelöst durch eine Baustoffzusammensetzung enthaltend
a) 20 bis 86 Gew.-% Bindemittel, ausgewählt aus Zement oder Kalk,
b) > 0 bis 35 Gew.-% Vermikulit,
c) 0,15 bis 1,0 Gew.-% einer Additivzusammensetzung,
d) 0 bis 40 Gew.-% Zuschlagsstoff, ausgewählt aus Sand und/oder Blähglas,
wobei die Gewichtsanteile so gewählt sind, dass sie zu 100 Gew.-% addieren.

Überraschend wurde gefunden, dass die erfindungsgemäße Baustoffzusammensetzung hervorragende Entfeuchtungs- und Feuchteregulierungseigenschaften aufweist und als Feuchtmauerputz und/oder Mörtel und/oder als Baustoff (zum Beispiel Steine, Platten) Verwendung finden kann. Hierbei werden die physikalischen Grundlagen der Feuchtebewegung, Diffusion, Oberflächenvergrößerung und Verdunstung genutzt. Durch die erfindungsgemäße Baustoffzusammensetzung können gleichermaßen Schäden durch kapillare Feuchtigkeit sowie hygroskopische Feuchtigkeit und Kondensation als auch Feuchteschäden durch Niederschläge und Hochwasser beseitigt werden. Es findet eine effektive Entfeuchtung und Feuchteregulierung in Gebäuden statt.

Die Additivzusammensetzung umfasst
a) ein Verdickungsmittel,
b) ein Trägermaterial aus Kalksteinmehl und/oder Quarzmehl,
c) einen Luftporenbildner.

Das Verdickungsmittel ist bevorzugt ausgewählt aus Methylcellulose, Methylhydroxyethylcellulose (MHEC), Methylhydroxypropylcellulose (MHPC), Hydroxyethylcellulose (HEC) und/oder Polyacrylamid. Am meisten bevorzugt ist Methylcellulose. Das Verdickungsmittel ist in der Additivzusammensetzung bevorzugt im Bereich von 0,5 bis 5 Gew.-%, mehr bevorzugt 0,7 bis 3,5 Gew.% enthalten.

Das Luftporenmittel für die Additivzusammensetzung ist vorzugsweise ausgewählt aus einer Gruppe umfassend alpha-Olefinsulfonate, Alkylbenzolsulfate, Alkalisulfat, Natriumsalzen von Alkylnaphthalinsulfonat, Naphthalinderivaten und/oder Natriumlaurylsulfat (Na-Oleat). Besonders bevorzugt ist der Luftporenbildner ausgewählt aus alpha-Olefinsulfonat, C₁₂-C₁₄-alpha-Olefinsulfonat bzw. dessen Natriumsalz oder Na-Oleat.

Das Trägermaterial ist aus Kalksteinmehl und/oder Quarzmehl.

Gewichtsbereich von 30 bis 86 Gew.-%, mehr bevorzugt 50 bis 80 Gew.-%, bezogen auf die gesamte Baustoffzusammensetzung vorhanden ist.

Die erfindungsgemäße Baustoffzusammensetzung ist Poren-bildend, vorzugsweise Nano- und/oder Mikroporen-bildend. Durch diese Eigenschaft der Baustoffzusammensetzung ist gewährleistet, dass ein ausreichend großes Porenvolumen der Baustoffzusammensetzung nach Aufbringung der Zusammensetzung als Beschichtung beispielsweise auf ein Mauerwerk gegeben ist. Besonders bevorzugt bilden sich die Poren unter Ausbildung eines kapillaren Netzwerkes aus, wodurch die Poren somit leitend verbunden sind. Dadurch wird ein effektiver Feuchtigkeitsausgleich der aufgebrachten Baustoffzusammensetzung mit dem Mauerwerk und der Umgebung zur Feuchteregulierung geschaffen. Durch die Vielzahl von Mikro- und Nanoluftporen die mit einem Netz von sehr feinen Kapillaren verbunden sind, kann Feuchtigkeit nur als Gas das Mauerwerk verlassen. Daher bleiben die Schadstoffe in gelöster Form im Mauerwerk zurück und können daher am Putzgefüge und im Mauerwerk keinen Schaden anrichten.

Eine z.B. aufgetragene Putzschicht enthaltend die erfindungsgemäße Baustoffzusammensetzung ist in der Lage, Wasserdampf bis zum Erreichen der Ausgleichsfeuchte aufzunehmen, zu speichern und beim Lüften wieder rasch an die Raumluft abzugeben, ohne dass mitgeführte Schadstoffe in die Putzschicht eindringen und dort auskristallisieren können. Das hygroskopisch mikro- und/oder nanoporöse Material bindet die Wassermoleküle des eindringenden Dampfes an die Wassermoleküle des im Material vorhandenen Wassers. Weil der Dampf im Material zu flüssigem Wasser wird, können auch dünne Putzstärken schnell sehr große Mengen Wasserdampf aufnehmen. So werden auch mit Putzstärken von 20 bis 30 mm hervorragende Feuchtepuffer geschaffen.

Die erfindungsgemäße Baustoffzusammensetzung in Form eines Mörtel-, Putz-Beschichtungs- und Baustoffsystems stellt durch seine mikro- und nanoporöse Struktur bereits in der Auftragstärke von 20 bis 30 mm einen hervorragenden Feuchtepuffer dar, der eine Auskeimung von Schimmelpilzsporen und der Mycelbildung systematisch die Entwicklungsgrundlage entzieht, sowie nur das Einwandern von Wasserdampf ermöglicht und somit Ausblühungen von Salzen, Chloriden, Sulfaten und Carbonaten durch Nichteinwanderung und Sättigung des Mörtel-, Putz-, Beschichtungs- und Baustoffsystems vorbeugt.

Die entscheidenden Entwicklungsfaktoren zur Wandausbildung sind eine mit Schadstoffen sowie Feuchtigkeit gesättigte Wand sowie Putzträger, die diese durch den Transport der Feuchtigkeit an die Oberfläche abgeben. Die notwendige Verdunstungszone, das heißt die Umwandlung von Wasser in Wasserdampf befindet sich dort, wo Mauer und Putz aufeinandertreffen. Wasser und mitgeführte gelöste Salze können hierbei nicht mehr wie bei herkömmlichen Sanierputzen in die Luftbläschen eindringen und den Putz zerstören.

Vielmehr sorgt die natürliche Luftbewegung der Putzschicht dafür, dass sich die Wassermoleküle aus ihren Verbindungen lösen und als Wasserdampf an die Oberfläche entweichen.

Dies hat folgende Vorteile:
- kein Auskristallisieren der Salze in den Luftporen,
- die Diffusion wird nicht beeinträchtigt oder außer Kraft gesetzt,
- die Putzoberfläche bleibt hierbei trocken und ausbildungsfrei.
   Weitere Vorteile, die durch die erfindungsgemäße Baustoffzusammensetzung bei Verwendung als Putz in Erscheinung treten, sind
- ein höheres Volumen als Normalputz,
- die Funktion des Putzes ist unabhängig von Begleitmaßnahmen,
- die Funktion des Putzes ist unabhängig von der Höhe des Feuchtigkeits- und Salzgehalts,
- es ist keine Salzbehandlung notwendig,
- sie ist einfach zu verarbeiten ohne Verwendung übermäßiger Mengen an Chemikalien,
- es ist keine Ablüftung des Mauerwerks erforderlich,
- es bestehen keine Wartezeiten zwischen dem Aufbringen der einzelnen Putzlagen und somit können Bauverzögerung sowie ein Baustillstand verhindert werden.

Ein weiterer Vorteil ergibt sich dadurch, dass lediglich ein Material für alle drei Arten von Feuchtigkeit, nämlich aufsteigende Feuchtigkeit, hygroskopische Feuchtigkeit sowie Kondensation verwendet werden muss. Darüber hinaus ist auch die Oberflächengestaltung flexibel. Die erfindungsgemäße Baustoffzusammensetzung kann in einem Entfeuchtungs-, Feuchteregulierungs-, Baustoff-, Feuchtmauerputz- und/oder Mörtelsystem eingesetzt werden, wobei es keinen Unterschied macht, ob die erfindungsgemäße Baustoffzusammensetzung auf ein Ziegel oder Mischmauerwerk oder Stein (innen oder außen), im Kellerbereich oder in Stallungen eingesetzt wird. Die hohe Anzahl der Mikroporen, vorzugsweise 15 bis 45 % vervielfachen die Oberfläche des Mauerwerks in allen Anwendungsbereichen erheblich.

Bei gleicher relativer Feuchte nehmen unterschiedliche Materialien verschiedene Mengen Wasser auf, bis diese ihre Ausgleichsfeuchte erreicht haben. Von den jeweiligen Porenstrukturen der einzelnen Baustoffe ist die jeweilige Wasseraufnahmemenge bis zu ihrer Ausgleichsfeuchte abhängig.

Durch immer wiederkehrende Wetterkapriolen werden die Bewohner von betroffenen Überschwemmungsgebieten schweren Belastungen ausgesetzt. Neben der akuten Gefahr für Personen und Eigentum sind die Folgeschäden und die daraus entstehenden Kosten oft von enormem Ausmaß. Mit Hochwasser in Berührung kommende Gebäude sind extremen Situationen ausgesetzt und müssen in der Regel von Grund auf komplett saniert werden. In Mauern eingedrungene Feuchtigkeit, Schmutz und Öl setzen sich hartnäckig fest und können in der Regel nur langwierig und mit großem Aufwand bekämpft werden. Durch die Feuchtigkeit im Mauerwerk (Wasser statt Luft in den Poren) ist diese kälter, dadurch kommt es zusätzlich zu Kondensationsphänomenen. Folgeschäden sind zerstörte Verputze, wachsende Schimmelgefahr und Modergeruch.

Die erfindungsgemäße Baustoffzusammensetzung zeigt in Form eines Mörtel, Putz oder Beschichtungssystems eine verbesserte Wärmedämmung, wodurch Energiekosten gespart werden können. Das Mörtel-, Putz- und Beschichtungssystem nutzt die elementaren Naturgesetze der Thermodynamik. Das in der feuchten Wand befindliche Wasser - eindringende, bzw. aufsteigende Feuchtigkeit - verdampft nutzt die elementaren Naturgesetze der Thermodynamik. Das in der feuchten Wand befindliche Wasser - eindringende, bzw. aufsteigende Feuchtigkeit - verdampft schnell, der Weitertransport in flüssiger Form wird durch die besonderen typischen Putzeigenschaften verhindert. Der Effekt wird erzielt durch die entfeuchtende/feuchteregulierende Eigenschaft des Systems durch die spezielle Bildung von Kapillaren und Mikro- sowie Nano-poren.

Bindemittel und die beim Mischungsprozess entstehenden Makroluftporen sind in den herkömmlichen Putzen der Transportweg für Wasser. Der erfindungsgemäße Entfeuchtungsputz unterbricht den Feuchtigkeitstransport in Form von Wasser durch Aufbau von speziellen Kapillaren und Mikro- und Nanoporen. Somit endet der Wassertransport an den Kapillaren und der Weitertransport erfolgt ausschließlich über Dampfdiffusion.

Um Ausblühungen und Schimmelbefall dauerhaft zu verhindern ist ein weiterer wichtiger Faktor die Dauer der Rücktrocknung. Entscheidend ist hierfür die innere Oberfläche des Putzes. Konnte Tauwasserausfall nicht völlig ausgeschlossen werden, so bewirken die Kapillarkräfte des Baustoffs, Putzes, Mörtel und/oder der Beschichtung/Oberputz, dass das Wasser in Dampfform vorliegt und rasch an die Putzoberfläche befördert wird, ohne den Mittransport von Schadstoffen (z.B. Salzen, Chloriden, Sulfaten, Carbonaten etc.).

Die Kapillaren mit den dazwischen gelagerten Mikro- und Nanoporen bewirken eine Unterbrechung des Wassertransportes, eine Umwandlung von Wasser zu Wasserdampf, den Transport des Wasserdampfs (Diffusionsweg) zur Umgebungsluft, eine geschmeidige Konsistenz und gute Verarbeitbarkeit, eine extrem schnelle Trocknung, eine Verarbeitung bis -5°C ist möglich (bedingt durch hohe Diffusion bzw. schnellen Wasserdampftransport), ein höherer Wärmedurchlasswiderstand entsteht, da die Mikroporen schlechtere Wärmeleiter sind.

Die meisten Schimmelpilze benötigen ein leicht saures bis neutrales Milieu. Hochalkalische Materialien stellen kein geeignetes Substrat für eine Schimmelpilzansiedlung dar.

In einer weiteren Ausführungsform der vorliegenden Baustoffzusammensetzung ist es deshalb bevorzugt, dass der pH-Wert der Baustoffzusammensetzung größer als 7, vorzugsweise ≥ 10, und insbesondere mindestens größer oder gleich 11 ist.

Schimmelpilze benötigen zum Wachstum ein Substrat aus verwertbarem organischem Material. Die erfindungsgemäße Baustoffzusammensetzung ist jedoch vorzugsweise frei von organischem Material.

Die hochleistungsfähige Porenstruktur erhält der Putz über die ausgeglichene Zusammensetzung und seinen Mischvorgang, die ohne chemischen Luftaufbau (Aluminiumsulfate etc.) auskommt. Nur anhand des Mischvorgangs wird Luft gleichmäßig in Form von Mikro- und Nanoporen gleichmäßig in den Baustoff, Putz, Mörtel und/oder Beschichtung/Oberputz stabil eingeschlossen.

Erfindungsgemäß kann die Baustoffzusammensetzung zusammenfassend aus den Grundstoffen:
Zement-Additivmischung-Vermikuilt- oder
Zement-Additivmischung-Vermikuilt-Sand- oder
Zement-Additivmischung-Vermikuilt-Blähglas oder
Zement-Additivmischung-Vermikuilt-Sand-Blähglas oder
Kalk-Additivmischung-Vermikulit- und/oder
Kalk-Additivmischung-Vermikuilt-Sand- und/oder
Kalk-Additivmischung-Vermikuilt-Blähglas und/oder
Kalk-Additivmischung-Vermikuilt-Sand-Blähglas und/oder
Kalk-Zement-Additivmischung-Vermikulit- und/oder
Kalk-Zement-Additivmischung-Vermikulit-Sand und/oder
Kalk-Zement-Additivmischung-Vermikulit-Blähglas und/oder
Kalk-Zement-Additivmischung-Vermikulit-Sand-Blähglas und/oder
zuzüglich einem abgestimmten Spezialadditiv zusammengesetzt sein.

Im Gegensatz zu den im Stand der Technik angeführten Beispielen enthält die erfindungsgemäße Baustoffzusammensetzung, vorzugsweise in Form eines Baustoffs, Putzes, Mörtels und/oder als Beschichtung/Oberputz als Bindemittel Zement und/oder Kalk und/oder eine Mischung aus beiden mit einem Rohstoffzuschlag von Vermikulit und/oder eine Vermikulit-Sand-Mischung ohne weitere organische Beimischungen. Die Zusammensetzungen des Standes der Technik bestehen neben einem Anteil an Kalkhydrat zusätzlich aus hydraulischen oder synthetischen Bindemitteln, die einen ganz anderen Abbindeprozess vollziehen und als Ergebnis andere physikalische Eigenschaften aufweisen.

In der vorliegenden Erfindung fördert der Anteil an Vermikulit die oben genannte Bildung feinkristalliner Strukturen in überraschender Weise und erhöht die innere Oberfläche und damit die Sorptionswirkung des Putzes erheblich. Vermikulite können enorm viel Wasser aufnehmen und weisen ein hohes Wasserrückhaltevermögen auf.

Überraschend wurde im Sinne der Erfindung gefunden, dass die Baustoffzusammensetzung enthaltend Vermikulit sich beim Anmischen eines Putzes, Mörtels und/oder einer Beschichtung/Oberputz nicht entmischt. Das Vermikulit schwimmt nicht auf und es findet eine relativ homogene Verteilung der einzelnen Bestandteile statt. Dadurch können die erfindungsgemäß gewünschten Vorteile einer effektiven Entfeuchtung und/oder Feuchteregulierung erreicht werden.

Das Mischverhältnis Vermikulit zu Zement, Kalk und/oder einer Mischung von Kalk und Zement ist so ausgewogen, dass die Mischung für Baustoff, Putz, Mörtel und/oder Beschichtung/Oberputz überdurchschnittlich viel Wasser aufnehmen kann bei gleichzeitiger Gewährleistung einer schnellen Rücktrocknung. Die beschriebenen Eigenschaften der Vermikulite bringen in der Dosierung weitere entscheidende Vorteile mit sich:
1. Die Mischung weist ein für den Carbonatisierungsprozess notwendiges ausreichendes Wasserrückhaltevermögen auf. Dadurch kann auf den Zusatz von Cellulose oder anderen organischen Zuschlägen verzichtet werden. Auch der Zusatz von hydraulischen Bindemitteln erübrigt sich dadurch. Der Putz bleibt durch den Anteil an Vermikulit lange genug offen um carbonatisieren zu können. Alle auf den Markt befindlichen Oberflächenputze, die auf das Bindemittel Calciumhydroxid bauen und die in nur dünnen Schichtstärken von bis zu 3 mm aufgetragen werden, geben zur Verbesserung des Wasserrückhaltevermögens Zusätze bei, auf die erfindungsgemäß verzichtet werden kann.
2. Durch Vermikulit in der erfindungsgemäßen Baustoffzusammensetzung ist eine lang anhaltende Karbonatisierung gewährleistet, die eine lang anhaltende Alkalität sicherstellt. Versuche haben ergeben, dass eine erfindungsgemäße Beschichtung einer Gebäudewand nach Jahren noch einen pH-Wert von 11 aufweist, also stark alkalisch ist.
3. Die Mischung erhält durch den bestimmten Anteil an Vermikulit die Eigenschaft nach der Durchtrocknung das Feuchteklima im Innenraum ausgeglichen zu gestalten. Sowohl die Spitzen einer zu feuchten als auch einer zu trockenen Raumluft werden genommen.

Durch Beimischung von Sand und/oder Blähglasgranulat kann die vorliegende Erfindung nochmals verbessert werden. Zum einen die Verarbeitung, da das beigemischte Sand- und/oder Blähglasgranulat wie ein Kugellager fungiert und zum anderen wird aufgrund der Struktur die innere Oberfläche des Baustoffs, Putzes oder Mörtels erhöht. Außerdem wird dadurch der hohe pH-Wert des Putzes von 10 oder mehr langfristig gesichert.

Aufgrund der hervorragenden Entfeuchtungs- und Feuchteregulierungseigenschaften der Baustoffzusammensetzung in Form eines Feuchtmauerputzes und/oder Mörtels oder als Baustoff ergibt sich vorliegend ein weiterer Gegenstand der Erfindung.

Die Erfindung betrifft somit ein Mörtel-, Putz-, Beschichtungs- oder Baustoffsystem enthaltend eine Baustoffzusammensetzung wie oben definiert.

Die Erfindung betrifft auch ein Verfahren zur Entfeuchtung und/oder Feuchteregulierung von Mauerwerken, wobei eine Baustoffzusammensetzung wie oben definiert auf ein zu behandelndes Mauerwerk als Beschichtung aufgebracht wird.

Im Anschluss an die Aufbringung der Beschichtung wird diese gehärtet und es werden Nano- und Mikroporen gebildet. Die Nano- und Mikroporen werden aufgrund der Eigenschaften der Baustoffzusammensetzung ferner durch Kapillaren miteinander verbunden, sodass ein offenes Netzwerk entsteht, das die bereits oben geschilderten Vorteile aufweist. Vorzugsweise weist die Beschichtung einen Luftporengehalt aus Nano- und Mikroporen von 15 bis 60 Vol.-%, bevorzugt 20 bis 45 Vol.-%, bezogen auf das Gesamtvolumen der Beschichtung auf.

Durch die erfindungsgemäße Baustoffzusammensetzung sowie das Verfahren zur Entfeuchtung bzw. Feuchteregulierung von Mauerwerken konnte eine kostengünstige, baubiologische, ökologische, mineralische, dauerhafte und gesundheitsverträgliche Mauerwerkssanierung bzw. eine vorbeugende Maßnahme geschaffen werden.

Die erfindungsgemäße Baustoffzusammensetzung schafft bei Verwendung als Mörtel-, Putz- oder Beschichtungssystem eine ansprechende Raumgestaltung sowie ein angenehmes natürliches Raumklima.

Das Mörtel-, Putz- und Beschichtungssystem setzt nicht auf kurz- oder mittelfristige Problembehebung, sondern auf dauerhafte Feuchtigkeitsabgabe und Feuchteregulierung ohne Einwanderung und Auskristallisation von Schadstoffen wie zum Beispiel Salzen, Chloriden und Sulfaten in das Putzgefüge.

Als Vorbeugung bei Neubauten sowie zur dauerhaften natürlichen Bekämpfung bei alten und historischen Gebäuden ist dieses System somit hervorragend geeignet. Von dem erfindungsgemäßen System gehen keinerlei gesundheitliche Belastung für die Nutzer aus und neben seiner Unbedenklichkeit für die Nutzer übt es einen positiven Einfluss auf die Gestaltung eines gesunden Raumklimas aus sowie weist Dämmmöglichkeiten von feuchten und salzbelasteten Räumen auf.

Das Mörtel-, Putz- und Beschichtungssystem der vorliegenden Erfindung enthaltend die erfindungsgemäße Baustoffzusammensetzung ist dem Bedürfnis nach natürlichen, mineralischen und ökologischen Ressourcen angepasst und unabhängig in der Verwendung von der Mauerwerksart. Es kann beispielsweise auf Misch-, Naturstein-, Beton-, Bims-, Ziegel-, Klinkermauergewerken und so weiter aufgebracht werden.

Das System kann zusätzlich in wenigen Arbeitsgängen in Form von Haftputz, Funktionslage, Fein- und/oder Oberputz besonders leicht und ohne große Wartezeiten verarbeitet werden. Die leichtere Verarbeitung ermöglicht es auch dem Heimwerker dieses System einfach anzuwenden.

Anhand der nachfolgenden Figuren 1 bis 8 werden weitere Vorteile, Merkmale und Besonderheiten der vorliegenden Erfindung, wie sie bevorzugt jedoch nicht ausschließlich Anwendung finden kann, beschrieben. Es zeigen:
- Fig. 1: ein durch Feuchtigkeit und Witterungseinflüsse geschädigtes Mauerwerk,
- Fig. 2: exemplarisch ein mögliches Mengenverhältnis von den in der Erfindung enthaltenen Additiven, Zementen und Vermikuliten,
- Fig. 3: eine Trockenmischung des Mauerputzes,
- Fig. 4: einen bereits angesetzten Putz in einem Behältnis,
- Fig. 5: den Putz nach entfernen des Behältnisses,
- Fig. 6: den Putz gemäß Fig. 5 nach zwei Stunden
- Fig. 7: eine Wand, welche zur einen Hälfte mit Haftgrund und zur anderen Hälfte mit dem Putz bestrichen ist und
- Fig. 8: ein Bild des vollständig ausgetrockneten Putzes.

In den Figuren werden für ähnliche oder gleiche Teile dieselben Bezugszeichen verwendet, wobei entsprechende oder vergleichbare Vorteile erreicht werden, auch wenn eine wiederholte Beschreibung aus Vereinfachungsgründen entfällt.

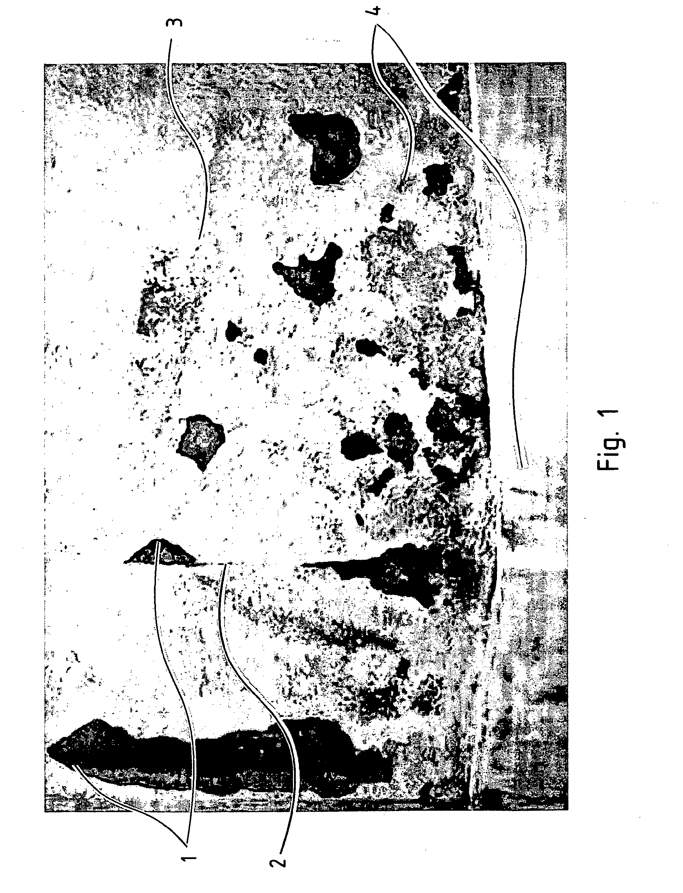

In Fig. 1 ist ein durch Feuchtigkeit und deren Folgen beschädigtes Mauerwerk gezeigt. Insbesondere zu erkennen sind von einem Putz abblätternde Farbe 1, im Oberflächenputz enthaltene Risse 2 und Wasserschäden 3 sowie Schimmel 4. Wasserschäden 3 und Schimmel 4 sind die Folge einer Durchfeuchtung der Wände, wie sie durch normale Niederschlagsraten und aufsteigendes Wasser aus dem Erdreich und dem Mauerwerk entstehen können. Die Ursache für Risse 2 sind häufig Feuchtigkeit und undichte Fugen. Durch die Risse 2 kann ein Nässetransport ins Wandinnere begünstigt werden. Salze und andere den Oberflächenputz schädigende Stoffe können sich im Mauerwerk lösen. Durch Dampfdiffusion und andere Transportwege zwischen Mauerwerk und Umgebung können die gelösten Salze und schädigenden Stoffe den Putz und die darauf aufgebrachte Wandfarbe angreifen.

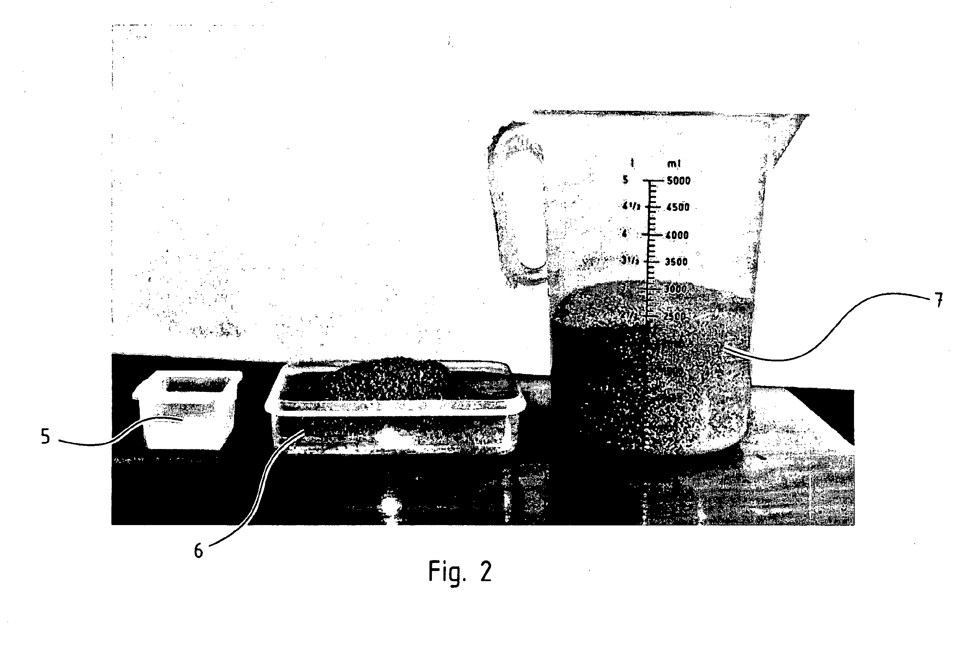

In Fig. 2 sind Inhaltsstoffe der Erfindung in einem möglichen, aber nicht ausschließlichen Verhältnis gezeigt. Auf die Bildebene bezogen sind von links nach rechts eine mögliche der Erfindung entsprechende Menge Additiv 5, Zement 6 und Vermikulit 7 angeordnet. Vermikulit 7 besitzt starke hygroskope Fähigkeiten, ist wärmedämmend, schalldämmend, geruchlos und gesundheitlich unbedenklich. Die Additive 5 können gemäß der Erfindung aus Verdickungsmittel, Trägermaterial und einem Luftporenbildner bestehen. Der Zement 6 kann gemäß der Erfindung als bevorzugtes aber nicht ausschließliches Bindemittel zum Einsatz kommen.

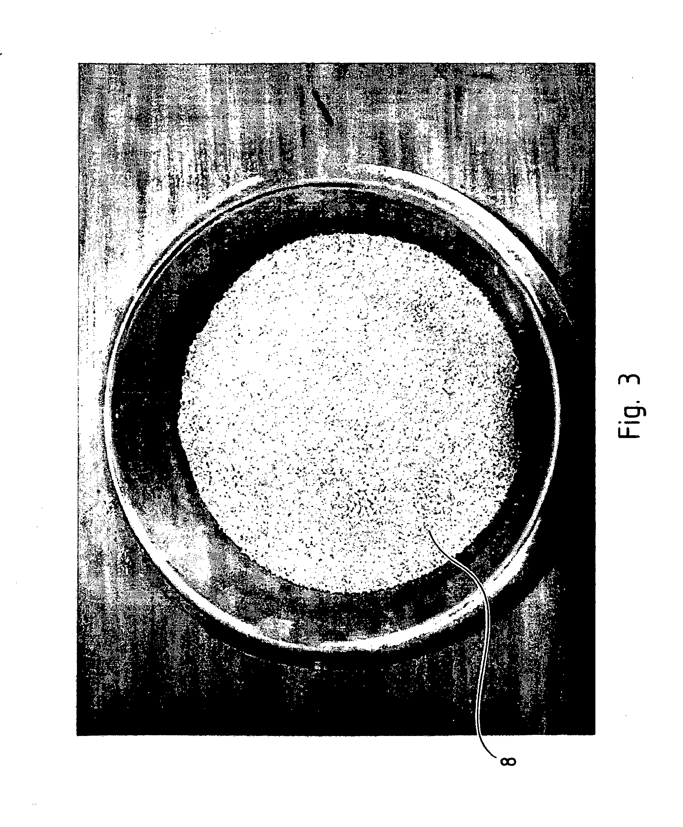

In Fig. 3 ist eine Trockenmischung 8 bestehend aus denen in Fig. 2 gezeigten Einzelkomponenten Additiv 5, Zement 6 und Vermikulit 7 zum Anmischen eines Putzes unter Zugabe von Wasser zu sehen. Optional kann dem Putz noch ein hier nicht gezeigter Zuschlagsstoff beigefügt werden.

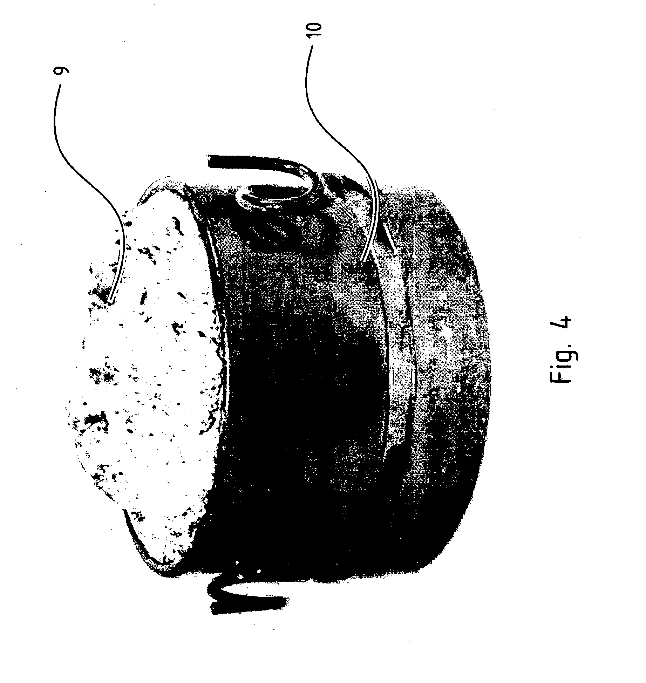

Fig. 4 zeigt die bereits angerührte Probe der Putzmischung 9 in einem Behältnis 10. Die Probe 9 wird folgend in dem Behältnis 10 glattgestrichen. Anschließend wird das Behältnis 10 entfernt. In der Probe 9 bilden sich erfindungsgemäß während des Mischvorgangs Luftporen, spezielle Kapillare, Mikroporen und Nanoporen aus. Da die Größe von Mikroporen und Nanoporen unterhalb des Auflösungsvermögens des menschlichen Auges liegt können diese in den hier gezeigten unvergrößerten Abbildungen nicht erkannt werden.

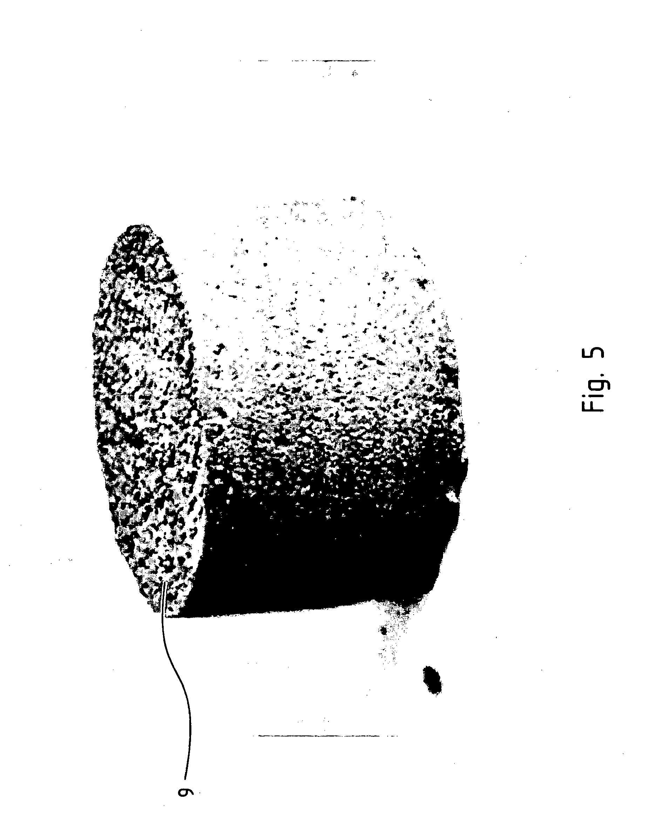

Die Fig. 5 zeigt die Probe 9 nach Entfernen des Behältnisses. Die Probe 9 weist eine sehr gute Formstabilität und Homogenität auf. Gut sichtbar sind weiterhin die während des Anmischens entstandenen Luftporen.

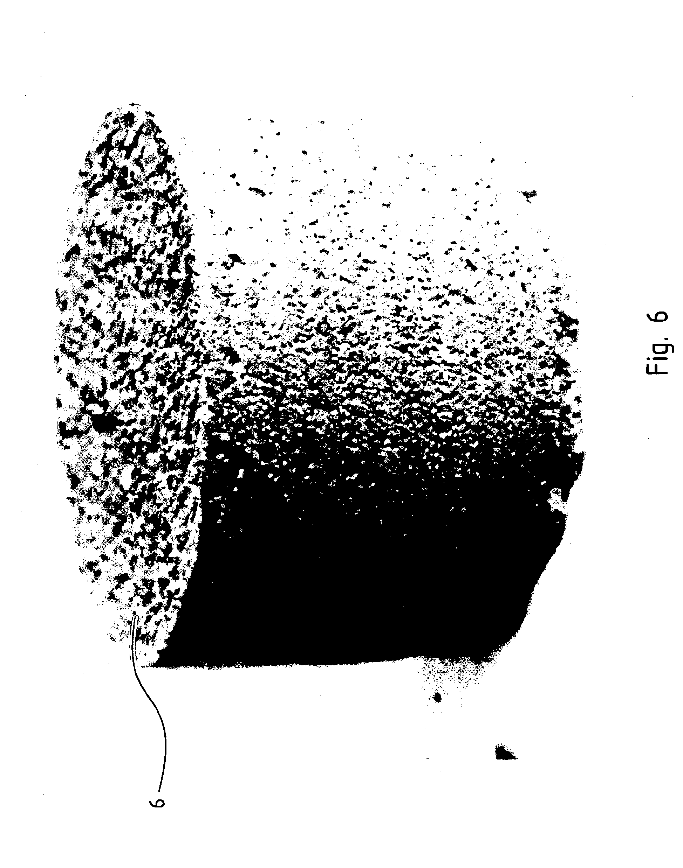

Fig. 6 zeigt die Probe 9 aus Fig. 5 nach einer Verweildauer von zwei Stunden. Bekannt ist, dass Vermikulit 7 in vielen Baustoffen nach Ansetzen des Putzes mit Wasser aufschwemmt oder zu einer Entmischung führt. Bei dem Ansetzen eines Putzes nach der erfindungsgemäßen Zusammensetzung entmischt sich der Putz nicht und Vermikulit 7 schwemmt nicht auf. Ebenfalls gut erkennbar ist die stabile und homogene Form und Beschaffenheit der Probe 9.

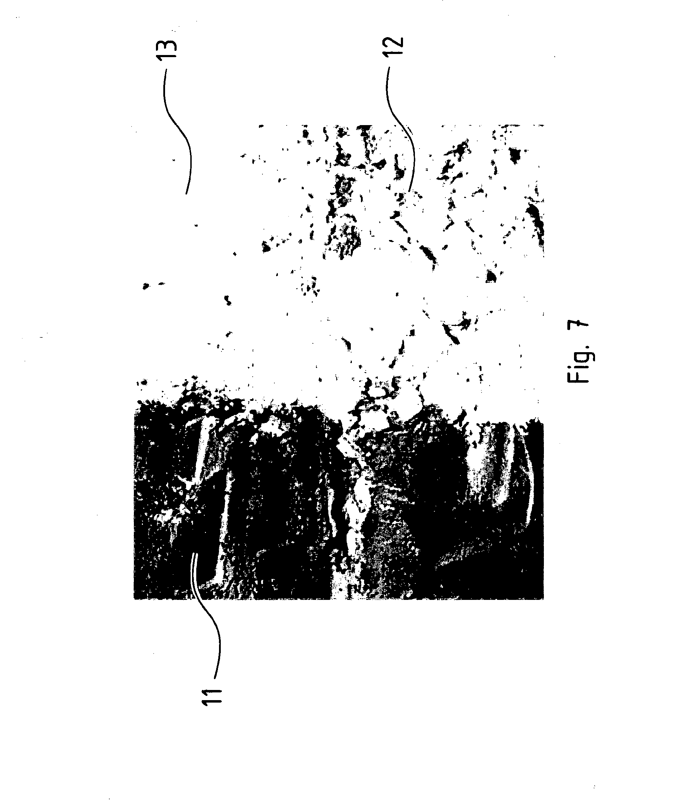

Fig. 7 zeigt ein Mauerwerk mit verschiedenen Abschnitten 11, 12 und 13. In Abschnitt 11 ist der Haftgrund zu sehen mit dem das Mauerwerk vorbehandelt ist. Der erfindungsgemäße Putz ist in einem Abschnitt 12 einfach aufgetragen und in einem anderen Abschnitt 13 glattgestrichen. Je nach Anwendungsgebiet oder auftretendem Feuchtigkeitsgrad stellen schon Putzstärken zwischen 20 und 30mm einen ausreichenden Feuchtepuffer dar. Somit kann schon diese geringe Materialstärke des erfindungsgemäßen Putzes durch Wasser hervorgerufene Schäden, wie sie in Fig. 1 gezeigt sind, verhindern.

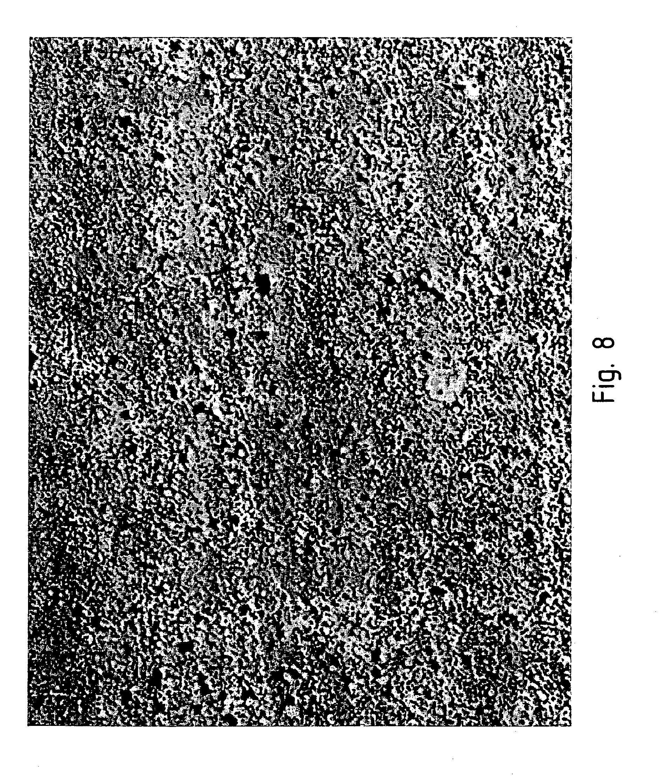

Fig. 8 zeigt maßstabsgerecht einen Abschnitt einer Wand. Um die Struktur des Putzes sichtbar zu machen wurden die obersten Schichten des Putzes abgeschält. Der vollständig ausgehärtete Putz weist die bereits aus der in Fig. 5 und Fig. 6 dargestellten Probe 9 bekannte homogene Struktur auf. Ebenfalls gut ersichtlich sind die stochastisch verteilten Luftporen verschiedener Größe. Die bereits in Fig. 4 erwähnten hier nicht sichtbaren Kapillaren, Mikroporen und Nanoporen unterbrechen den Feuchtigkeitstransport in Form von wanderndem Wasser. Erfindungsgemäß sind die Mikroporen und Nanoporen untereinander durch Kapillaren verbunden. Der Wassertransport endet an den Kapillaren. Aufgrund der physikalischen Eigenschaften von Kapillaren kondensiert das Wasser mit seiner hohen Oberflächenspannung in diesen. Aus den Kapillaren findet ein Weitertransport des Wassers nur noch über Dampfdiffusion statt. Entsprechend der Erfindung bewirken die Kapillaren den Transport des Wassers in Form von Wasserdampf zur Umgebungsluft und bewirken somit eine extrem schnelle Trocknung eines Mauerwerkes nach dem Auftragen des erfindungsgemäßen Putzes.

### Bezugszeichen:

- 1 -: abblätternde Farbe
- 2 -: Risse
- 3 -: Wasserschäden
- 4 -: Schimmel
- 5 -: Additiv
- 6 -: Zement
- 7 -: Vermikulit
- 8 -: Trockenmischung
- 9 -: Probe der Putzmischung
- 10 -: Behältnis
- 11 -: Haftgrund
- 12 -: Abschnitt mit aufgetragenem Putz
- 13 -: Abschnitt mit glattgestrichenem Putz

## Patentansprüche

1. Baustoffzusammensetzung enthaltend
a) 20 bis 86 Gew.-% Bindemittel, ausgewählt aus Zement oder Kalk,
b) > 0 bis 35 Gew.-% Vermikulit,
c) 0,15 bis 1,0 Gew.-% einer Additivzusammensetzung,
d) 0 bis 40 Gew.-% Zuschlagsstoff, ausgewählt aus Sand und/oder Blähglas, wobei die Gewichtsanteile so gewählt sind, dass sie zu 100 Gew.-% addieren,
**dadurch gekennzeichnet, dass** die Additivzusammensetzung
a) ein Verdickungsmittel,
b) ein Trägermaterial aus Kalksteinmehl und/oder Quarzmehl,
c) einen Luftporenbildner, ausgewählt aus einer Gruppe umfassend alpha-Olefinsulfonate, Alkylbenzolsulfate, Alkalisulfat, Natriumsalzen von Alkylnaphthalinsulfonat, Naphthalinderivaten und/oder Natriumlaurylsulfat (Na-Oleat),
umfasst.

2. Baustoffzusammensetzung gemäß Anspruch 1, **dadurch gekennzeichnet, dass** das Bindemittel Zement im Gewichtsbereich von 30 bis 86 Gew.-%, bezogen auf die gesamte Baustoffzusammensetzung, ist.

3. Baustoffzusammensetzung gemäß einem der voranstehenden Ansprüche, **dadurch gekennzeichnet, dass** der pH-Wert der Zusammensetzung größer 7, vorzugsweise ≥ 10 ist.

4. Verwendung der Baustoffzusammensetzung gemäß einem der Ansprüche 1 bis 3 als Baustoff.

5. Verfahren zur Entfeuchtung und/oder Feuchteregulierung von Mauerwerken, **dadurch gekennzeichnet, dass** eine Baustoffzusammensetzung gemäß einem der Ansprüche 1 bis 3 auf ein zu behandelndes Mauerwerk als Baustoffsystem aufgebracht wird.

6. Verfahren gemäß Anspruch 5, **dadurch gekennzeichnet, dass** das Baustoffsystem gehärtet und Nano- und Mikroporen gebildet werden.

7. Baustoffsystem enthaltend eine Baustoffzusammensetzung gemäß einem der Ansprüche 1 bis 3.

## Claims

1. Building material composition including
a) 20 to 86 % by weight of binder selected from cement or lime,
b) > 0 to 35 % by weight of vermiculite,
c) 0.15 to 1.0 % by weight of an additive composition,
d) 0 to 40 % by weight of aggregate selected from sand and/or foam glass,
wherein the weight portions are selected such that they add to 100 % by weight,
**characterized in that** the additive composition includes
a) a thickener,
b) a carrier material of limestone powder and/or quartz powder,
c) an air entraining agent selected from a group including alpha-olefin sulfonate, alkylbenzene sulfate, alkali sulfate, sodium salts of alkyl naphthalene sulfonate, naphthalene derivatives and/or sodium lauryl sulfate (Na oleate) .

2. Building material composition according to claim 1, **characterized in that** the binder is cement in the weight range of 30 to 86 % by weight related to the overall building material composition.

3. Building material composition according to any one of the preceding claims, **characterized in that** the pH value of the composition is greater than 7, preferably ≥ 10.

4. Use of the building material composition according to any one of claims 1 to 3 as a building material.

5. Method for dehumidifying and/or humidity regulation of masonries, **characterized in that** a building material composition according to any one of claims 1 to 3 is applied to a masonry to be treated as a building material system.

6. Method according to claim 5, **characterized in that** the building material system is cured and nano- and micropores are formed.

7. Building material system including a building material composition according to any one of claims 1 to 3.

## Revendications

1. Composition de matériau de construction contenant
a) 20 à 86 % en poids de liant, sélectionné parmi du ciment ou de la chaux,
b) > 0 à 35 % en poids de vermiculite,
c) 0,15 à 1,0 % en poids d'une composition d'additifs,
d) 0 à 40 % en poids d'un agrégat, sélectionné parmi du sable et du verre
expansé,
dans laquelle les fractions en poids sont sélectionnées de façon telle que leur somme donne 100 % en poids,
**caractérisé en ce que** la composition d'additifs comprend
a) un agent épaississant,
b) une matière support sous forme d'une poudre de calcaire et/ou de poudre de quartz,
c) un entraîneur d'air ou formateur de pores d'air sélectionné dans un groupe comportant des sulfonates d'alpha-oléfine, des alkylbenzènesulfates, un sulfate alcalin, des sels de sodium d'alkylnaphtalènesulfonate, des dérivés de naphtalène et/ou du laurylsulfate de sodium (Na-oléate).

2. Composition de matériau de construction selon la revendication 1, **caractérisée en ce que** le liant est du ciment, dans une plage de poids de 30 à 86 % en poids, sur la base du total de la composition de matériau de construction.

3. Composition de matériau de construction selon l'une des revendications précédentes, **caractérisée en ce que** la valeur de pH de la composition est supérieure à 7, de préférence ≥ 10.

4. Utilisation de la composition de matériau de construction selon l'une des revendications 1 à 3 en tant que matériau de construction.

5. Procédé de déshumidification et/ou de régulation de l'humidité de murs, **caractérisé en ce qu'**une composition de matériau de construction selon l'une des revendications 1 à 3 est appliquée sur un mur à traiter en tant que système de matériau de construction.

6. Procédé selon la revendication 5, **caractérisé en ce que** le système de matériau de construction est durci et que des nanopores et des micropores sont formés.

7. Système de matériau de construction contenant une composition de matériau de construction selon l'une des revendications 1 à 3.
